# EUROPEAN PATENT APPLICATION

(11) **EP 1 720 124 A1**
(43) Date of publication of application: **08.11.2006**
(21) Application number: 06004576.2
(22) Date of filing: 07.03.2006
(51) Int. Cl.: G06Q 10/00, H04L 29/06, H04M 3/42

(54) **Communication system and method for determining next joint availability using presence information**

(30) Priority: 03.05.2005 US 677178 P; 15.09.2005 US 227476
(71) Applicant: Alcatel, 75008 Paris (FR)
(72) Inventor: Jachner, Jack, Lexington, MA 02420 (US)
(74) Representative: Schäfer, Wolfgang

(57) **Abstract**

A communication system determines next joint availability for a communication session between an originating user and at least one destination user using presence information. The communication system includes a presence server for collecting and storing presence information indicating current and future availability of the originating and destination users. When a request for the communication session is received from the originating user, and the destination user is currently unavailable for the communication session, a next available time for the communication session is determined from the presence information of the originating and destination users.

## Description

This application claims the benefit of U.S. Provisional Application No. 60/677,178, filed May 3, 2005.

### BACKGROUND OF THE INVENTION

### Technical Field of the Invention

The present invention relates in general to a presence-based communication system, and in particular, to determining a next available time for a communication session between two or more parties using presence information.

### Description of Related Art

Presence-based interactive communication services facilitate more efficient and effective communication sessions by enabling callees (presentities) to publish, in real time, their presence information (such as, the availability, activity, local time, location, current status of the active devices/applications, etc.) and their preference information (e.g., device preferences) to callers (presence watchers). The presence and preference information improves the efficiency of establishing various types of communication sessions, such as voice, text and multi-media (video+) communication sessions.

Presence systems utilize a presence server that manages presence information for a plurality of presentities. Presence servers operate to collect presence information from a variety of presence sources, such as calendar/scheduler applications, telephone applications or instant messaging applications, and aggregate the presence information to reflect the presence state of the presentities. For example, whenever a predefined presentity event occurs, such as turning on or off a presentity device, modifying the registration from a device, changing the instant messaging status on a device or entering a scheduled event into the presentity's calendar, the responsible presence source generates presence information to the presence server. By way of example, if a presentity has a meeting scheduled on his or her calendar from 10:00 a.m. to 12:00 p.m., at 10:00 a.m., the calendar/scheduler application notifies the presence server to set the presentity's presence status to "In a Meeting." As another example, when a presentity initiates or answers a phone call, the telephone application notifies the presence server to set the presentity's presence status to "On the Phone."

This presence information is currently accessible to watchers who have subscribed to the presence information of a presentity. For example, assuming the watcher is an originating user and the presentity is a destination user, the originating user can obtain the destination user's presence state reflecting the current availability and communications preferences of the destination user, and utilize the presence state of the destination user when attempting to establish a communication session with the destination user. However, if the destination user is currently unavailable or if the communication attempt fails, the originating user must retry the communication attempt at a later time without knowledge a priori of the time of next joint availability of both the originating user and the destination user. Thus, the next attempt of the originating user may occur at a time when the destination user is again unavailable.

Therefore, what is needed is a communication system for integrating both the current and future availability of parties to produce either an immediate communication between the parties or a future communication between the parties at a time of next joint availability of all parties.

### SUMMARY OF THE INVENTION

Embodiments of the present invention provide a communication system for determining current and future user availability for a communication session between an originating user and at least one destination user. The communication system includes a presence server for collecting and storing presence information on a plurality of presentities from multiple presence sources, in which the presence information indicates current and future availability of the presentities. The communication system further includes a communications manager for receiving a request for the communication session from the originating user, extracting the presence information of the originating user and the destination user(s) from the presence server, and, in response to current unavailability of the originating user and/or the destination user(s), determining a next available time for the communication session from the presence information of the originating user and the destination user(s).

In one embodiment, the communications manager is further operable to provide the next available time to the originating user for use in initiating a subsequent communication session with the destination user(s). In a further embodiment, the presence server further maintains preference information for each of the presentities, and the communications manager filters the information provided to the originating user relating to the next available time for the communication session based on the preference information of the originating and/or destination user(s).

In another embodiment, the communication system further includes a media server for receiving the request for the communication session from the originating user and providing the request to the communications manager. The media server is further operable to establish the communication session between the originating user and the destination user(s) at the next available time.

Embodiments of the present invention further provide a method for determining availability for a communication session between an originating user and at least one destination user using presence information indicating current and future availability of the originating and destination users. The method includes receiving a request for the communication session from the originating user, extracting the presence information of the originating user and the destination user(s), and, in response to current unavailability of the originating user and/or destination user(s), determining a next available time for the communication session from the presence information of the originating user and the destination user(s).

### BRIEF DESCRIPTION OF THE DRAWINGS

A more complete understanding of the present invention may be obtained by reference to the following detailed description when taken in conjunction with the accompanying drawings wherein:
FIGURE 1 illustrates an exemplary presence system in accordance with embodiments of the present invention;
FIGURE 2 illustrates an exemplary communications system for determining next availability for a communication session using presence information, in accordance with embodiments of the present invention;
FIGURE 3 is a flowchart illustrating an exemplary process for determining next joint availability for a communication session using presence information, in accordance with embodiments of the present invention; and
FIGURE 4 is a signal flow diagram illustrating an exemplary communication session flow, in accordance with embodiments of the present invention.

### DETAILED DESCRIPTION OF THE DRAWINGS

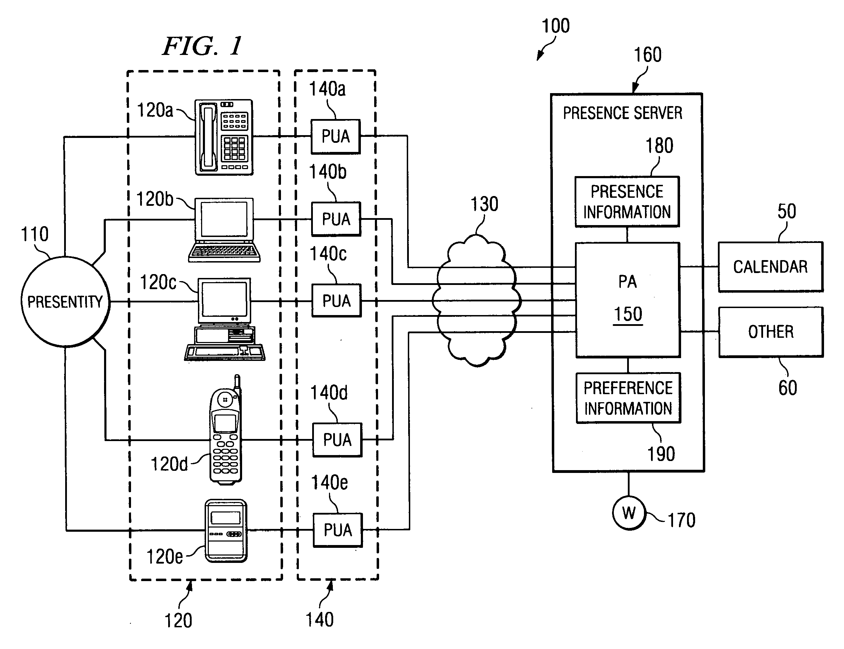

Referring to FIGURE 1, there is illustrated an exemplary presence system 100 capable of implementing various embodiments of the present invention. The presence system 100 includes a presentity 110 and one or more devices 120 associated with the presentity 110. The presentity 110 represents the destination user and provides presence information on the destination user's presence status to the presence system 100. Each device 120 is a physical communications device capable of sending and/or receiving communications over a communications network 130. Examples of such devices 120 include, but are not limited to, a desktop phone 120a, a laptop computer 120b, a personal computer 120c, a cell phone 120d and a personal digital assistant (PDA) 120e. In FIGURE 1, the communications network 130 represents any type of network over which media (circuit-switched or packet-switched voice or data) may be sent. For example, the communications network 130 can include the Public Switched Telephone Network (PSTN), Public Land Mobile Network (PLMN), one or more private local area networks (LANs), the Internet and/or any other type or combination of networks.

The presence system 100 further includes one or more presence user agents 140 (PUAs), a presence agent (PA) 150, a presence server 160 and one or more watchers 170 of the presentity 110. The PUAs 140 are capable of manipulating and providing presence information for the presentity 110. In FIGURE 1, a separate PUA 140 is shown for each device 120. However, it should be understood that in other embodiments, the number of PUAs 140 can vary based on the number and type of devices 120, the applications supported by the devices 120 and the system configuration. Each PUA 140 independently generates a component of the overall presence information for a presentity 110. Typically, PUA 140 generates presence information when a change in presence status occurs. Examples of changes in presence status include, but are not limited to, turning on and off a device 120, modifying the registration from a device 120 and changing the instant messaging status on a device 120.

The presence information from each of the PUAs 140 is collected by one or more presence agents (PAs) 150. In FIGURE 1, only one PA 150 is shown for simplicity. However, it should be understood that in other embodiments, there can be multiple PAs 150 for a presentity 110, each of which is responsible for a subset of the total subscriptions (requests for presence information from watchers 170) currently active for the presentity 110. In addition, the PA 150 collects presence information from a calendar/scheduler application 50 (e.g., Microsoft Exchange Server®, IBM Lotus Notes®, Meeting Maker® or other similar application) and other sources 60 of presence information (e.g., an instant messaging application). The PA 150 aggregates the presence information from each of the sources (e.g., PUA's 140, calendar 50 and other sources 60) and maintains the current complete presence information for the presentity 110. The PA 150 further provides the presence information to one or more watchers 170 (callers or communication session initiators) of the presentity 110.

The presence server 160 further stores preference information 190 for the presentities 110 and watchers 170 of the presence system 100. For example, the preference information 190 can include both presentity preference information (e.g., privacy filters) set by the presentity 110 for each watcher 170 and watcher preference information (e.g., watcher filters) set by each watcher 170 for presentities 110. The preference information 190 operates to filter the presence information 180 of a presentity 110 provided to a watcher 170 to accommodate privacy concerns, prioritization requirements, administrator policies and security considerations.

The presence server 160 is a physical entity that can operate as either the PA 150 or as a proxy server for routing requests from watchers 170 to the PA 150. The presence server 160 stores the presence information 180 and preference information 190 for a plurality of presentities 110. Thus, the PA 150, in combination with the presence server 160, is operable to receive presence information of the presentity 110 from the PUAs 140, receive requests from watchers 170 for the presence information and provide the presence information to the watcher(s) 170. When acting as a PA 150, the presence server 160 can also be co-located with a PUA 140.

The presence system 100 uses a presence protocol to provide presence services to presentities 110 and watchers 170. An example of a presence protocol that can be used in the presence system 100 is the Session Initiation Protocol (SIP), as described in J. Rosenberg, et al., "SIP: Session Initiation Protocol" RFC: 3261, June 2002 and in A. Roach, et al., "Session Initiation Protocol (SIP) - Specific Event Notification," RFC: 3265, June 2002, each of which are hereby incorporated by reference. SIP is an application-layer control protocol used to create, modify and terminate communication (voice, text and/or multimedia) sessions. SIP can be used with other protocols, such as the Real-time Transport Protocol (RTP), the Real-Time Streaming Protocol (RTSP), the Session Description Protocol (SDP), the International Telecommunication Union - Telecommunications ("ITU-T") H.263 standard (video CODEC), the G.711 and G.729 standards (audio CODECs), and other or additional standards or protocols. As will be appreciated, other or additional protocols and configurations may be used.

SIP networks are capable of routing requests from any user on the network to the server that maintains the registration state for a user. Thus, SIP networks enable a caller (watcher) to transmit a SUBSCRIBE request for presence information relating to a particular callee (presentity 110) to be routed to the presence server 160 that maintains the presence information for the presentity 110. In operation, the presence server 160 and PA 150 may be co-located with the SIP proxy/registrar for efficiency purposes.

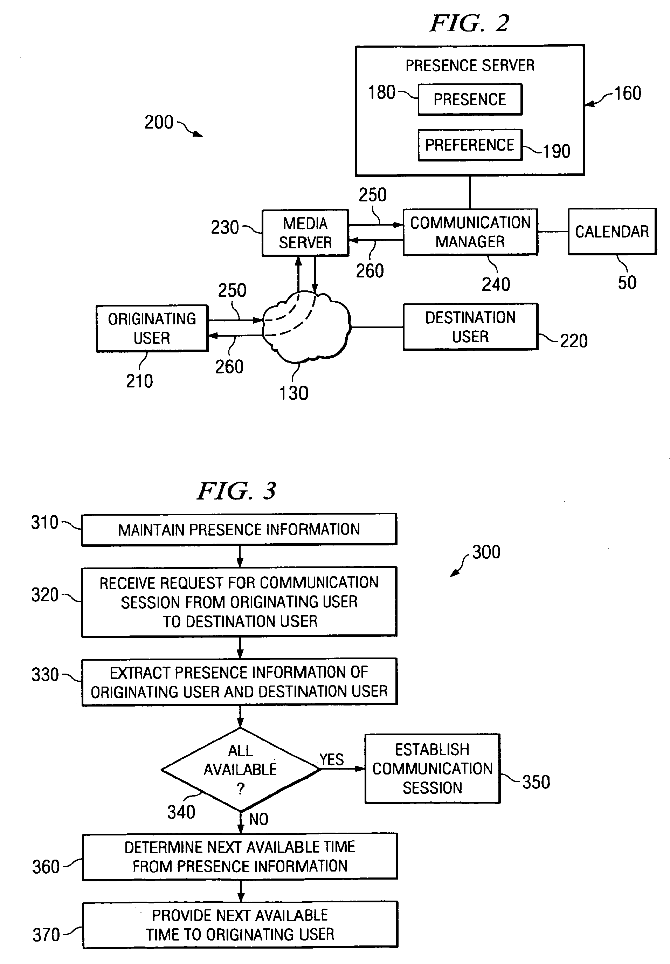

Referring now to FIGURE 2, there is illustrated an exemplary communications system 200 for determining next availability for a communication session using presence information, in accordance with embodiments of the present invention. In FIGURE 2, an originating user 210 sends a request 250 for a communication session (e.g., real-time or non-real-time voice, text or multimedia) with one or more destination users 220 (only one of which is shown for convenience) to a media server 230 through a communications network 130 (e.g., PSTN, PLMN, LAN, Internet, etc.). The media server 230 includes any device, such as a circuit switch, router, gateway or other switching device that routes media (voice, data, etc.) and/or converts media from the format required by one type of network to the format required by another type of network.

The request 250 may be an actual attempt to initiate an immediate communication session with the destination user 220 (e.g., by dialing a number of clicking on a name in a GUI display) or a query to determine the availability of the destination user 220 for a future communication session. For example, the destination user's presence information may be displayed to the originating user 210 informing the originating user 210 that the destination user 220 is currently unavailable for the communication session, thereby causing the originating user 210 to send the request 250 for a future communication session.

In response to receipt of the request 250, the media server 230 forwards the request 250 to a Communications Manager (CM) 240 for the destination user 220. The CM 240 manages communication sessions for the destination user 220 and other presentities/subscribers (watchers) registered with the presence server 160. The CM 240 is typically located on the destination user's premises with the presence server 160. However, in other embodiments, the CM 240 may distributed or remote from the presence server 160. The CM 240 may be co-located with the media server 230 or the presence server 160 or may be implemented on a separate device.

The request 250 includes the identity of the originating user 210 (e.g., caller uri), the identity of the destination user 220 (e.g., callee uri) and the requested media type for the new communication session. In addition, the request 250 may include other criteria for the communication session. For example, such other criteria can include the security mode or protocol requested by the originating user 210. Upon receipt of the request 250, the CM 240 sends a request to the presence server 160 for the destination user's 220 presence information 180 and preference information 190 and the originating user's 210 presence information 180 and preference information 190.

The presence server 160 integrates presence information 180 for the originating user 210 and destination user 220 from telephony information provided by PUA's (as shown in FIGURE 1), scheduling information provided by a calendar application 50 associated with the originating and/or destination user 210 and/or 220 and additional presence information provided by other sources of presence information, and sends the integrated presence information 180 and preference information 190 back to the CM 240. The CM 240 processes the returned presence information 180 and preference information 190 from the presence server 160 to determine the current presence state of the originating user 210 for the requested media type and the current presence state of the destination user 220 for the requested media type.

The current presence state of the originating user 210 and the destination user 220 are determined similarly, and therefore, only the presence state of the destination user 220 will be discussed herein. To determine the current presence state of the destination user 220, the CM 240 first determines the media status and availability of the destination user 220 for the requested communication session in the requested media type and other media types.

The presence information 180, including each of the devices registered in the network to the destination user 220, along with the media types supported by each device and the media types supported by each application running on each device, is used to obtain the media type capabilities of the destination user 220. In addition, the presence information 180 includes the on-going (concurrent) real-time communication sessions of the destination user 220. For example, the presence information 180 can include a current number of real-time voice communication sessions engaged in by the destination user 220, a current number of real-time multimedia communication sessions engaged in by the destination user 220 and a current number of real-time text communication sessions engaged in by the destination user 220. Furthermore, in other embodiments, the presence information 180 can include an activity-media status mapping to update the media status of media types upon the start / termination of a scheduled activity, such as a meeting, out-to-lunch, steering a car, etc. For example, the destination user 220 may enter preference data into the presence system specifying that no media types or only certain media types are available when the destination user's calendar indicates that the destination user is in a meeting.

In exemplary embodiments, the CM 240 compares the current media status of the destination user 220 in the requested media type and other media types with preference information 190 specifying a maximum number of interactions per media type supported by various devices of the destination user into the presence system. The maximum number of interactions for a particular media type indicates the maximum number of real-time interactions a user/presentity can handle before the particular media status enters a busy state. The maximum number of interactions is specified by the user/presentity as part of his/her preference rules. From the maximum number of interactions in the preference information 190 and the presence information 180 provided by the presence server 160, the CM 240 determines the media status and availability of the destination user 220 for the requested real-time communication session with the originating user in the requested media type and other media types.

For example, in one embodiment, the media status of the destination user 220 in a particular media type may refer to one of the following states: INACTIVE, ACTIVE, IN USE or BUSY. However, it should be understood that the term "media status" is not limited to these states, and can be determined and indicated in any other way. Using the above state examples, for each media type, the INACTIVE state signifies that the user/presentity is not ready to process interactions with this specific media type. For example, the INACTIVE state applies when the destination user 220 is not logged onto the network using any device capable of supporting that specific media type. The ACTIVE state indicates that the user/presentity is ready to process interactions with this specific media type. For example, the ACTIVE state applies when the destination user 220 is logged onto the network using one or more devices capable of supporting that specific media type.

For each media type, the IN USE state informs the CM 240 that the destination user 220 is involved in one or more communication sessions using this specific media type. However, the destination user 220 is still capable of processing additional interactions with the same media type. For each media type, the BUSY state indicates that the destination user 220 is not capable of engaging in any communication sessions with that media type. For example, the BUSY state might be caused by limitations of resources (e.g., communication channels), by limitations of the presentity's capability (e.g., the maximum number of interactions for the specific media type has been reached) or by preferences specifying that the particular media type is unavailable when the destination user's calendar indicates that the destination user is in a meeting, traveling, off-site, etc. In addition, the BUSY state might be caused by a conclusion that there are currently no active devices of the destination user 220 that both support the requested media type and meet any other criteria specified by the originating user 210.

If the destination user's 220 media status in the requested media type is "INACTIVE" or "BUSY" and/or the originating user's 220 media status in the requested media type is "INACTIVE" or "BUSY," the CM 240 determines that one or both of the destination user 220 and originating user 210 are unavailable for the requested communication session. However, if the media status of the destination user 220 and the originating user 210 indicate that both are currently available for the communication session, the CM 240 determines the devices for use in the new communication session, and transmits device information, such as the identity of the device, application and media channel of the devices, to the media server 230 to establish the communication session via the communication network 130.

If the CM 240 determines that the originating user 210 and/or destination user 220 is currently unavailable for the requested communication session in the requested media type or the originating user 210 and/or destination user 220 does not answer the communication session, the CM 240 determines that the communication session has failed. If the communication session fails or if the request 250 is a request for a future communication session, the CM 240 compares the presence information 180 and preference information 190 of the destination user 220 to the presence information 180 and preference information 190 of the originating user 210 to identify one or more times (hereinafter referred to as a next available time 260) when both the originating user 210 and the destination user 220 should next be available for the communication session in the requested media type or other media types.

For example, the CM 240 can compare the calendar presence information 180 of the originating user 210 to the calendar presence information 180 of the destination user 220 to determine the next time that both the originating user 210 and destination user 220 will be available in one or more media types. As an example, assuming the current time is 9:00 a.m., and the destination user's calendar indicates that the destination user is unavailable (e.g., in a meeting) between 9:00 a.m. and 10:00 a.m., and the originating user's calendar indicates that the originating user is unavailable (e.g., in a meeting) between 9:30 a.m. and 10:30 a.m., the first time that both the originating user 210 and destination user 220 will be available is 10:30 a.m.

In one embodiment, the CM 240 determines the next available time 260 for the communication session and sends the next available time 260 to the originating user 210, which informs the originating user 210 when to next attempt to establish the communication session with the destination user 220. The next available time 260 includes a specific time (e.g., 10:30 a.m.), or a time interval. Continuing with the above example, assuming that the destination user's calendar indicates that the destination user will become unavailable again (e.g., in another meeting) at 11:00 a.m., the next available time 260 may indicate that the originating user 210 should retry the communication session with the destination user 220 sometime between 10:30 a.m. and 11:00 a.m.

In another embodiment, the CM 240 examines the preference information of the originating user 210 and the destination user 220 to determine if either party has not subscribed to the "next available time" feature, or if either party has limited the scope of information relating to the next available time provided to the originating user 210 and/or destination user 220. In this case, the CM 240 either does not determine the next available time or the CM 240 filters the information provided to one or both of the originating user 210 and destination user 220 relating to the next available time 260.

In other embodiments, the CM 240 determines multiple next available times 260 and transmits one or more of the next available times 260 to the originating user 210. For example, if the CM 240 determines that the originating user 210 and destination user 220 will both be available in the time intervals between 10:30 a.m. and 11:00 a.m. and between 2:00 p.m. and 3:30 p.m., the CM 240 can transmit both time intervals to the originating user 210.

In another embodiment, the CM 240 further sets a trigger to automatically establish the communication session between the originating user 210 and the destination user 220 at the next available time 260. For example, when the internal (local) clock of the CM 240 indicates that the current time is the next available time 260, the CM 240 can attempt to establish the communication session by separately setting up each leg of the communication session. If the communication session fails at the next available time due to the now current unavailability of one or both parties, the CM can transmit a notification message to the originating user 210 informing the originating user 210 that the communication session failed, retry the communication session at a next available time determined at the time of failure and/or retry the communication session at a future predefined time. For example, the future predefined time may be determined from a preconfigured time period between successive communication session attempts.

In yet another embodiment, the CM 240 accesses the calendar application 50 of the originating user 210 and destination user 220 and schedules the communication session in the calendar application 50 for the originating user and the destination user at the next available time 260. For example, if the next available time 260 is 10:30 a.m., the CM 240 enters "communication session between originating user and destination user" at 10:30 on the calendars of both the originating user and the destination user.

In a further embodiment, the CM transmits a notification message (e.g., instant message, e-mail, voice mail, etc.) to the destination user 220 notifying the destination user 220 of the originating user's request for the communication session and the next available time 260 for the communication session. For example, the next available time 260 can be presented to the destination user 220 as a proposed time for a communication session with the originating user 210. The destination user 220 can acknowledge and agree to the next available time 260 or suggest an alternate time for the communication session. The CM 240 can negotiate a time of mutual convenience between the originating user 210 and destination user 220, using, for example, instant messaging (IM), e-mail, voice mail, terminal displays, user keystrokes and other types of communication. The agreed-upon next available time 260 can be stored in the CM 240 as a trigger to establish the communication session or scheduled into the calendars of the originating user 210 and the destination user 220.

It should be noted that the CM 240 may be constructed or configured using hardware, software, firmware, or combination thereof for managing communication sessions (e.g., real-time and non-real-time voice, text and multimedia communication sessions). As an example, the CM 240 could include one or more processors that execute instructions and one or more memories that store instructions and data used by the processors. The processor is generally understood to be a device that drives a general-purpose computer. It is noted, however, that other processor devices such as microcontrollers, Field Programmable Gate Arrays (FPGAs), or Application Specific Integrated Circuits (ASICs), or a combination thereof, can be used as well and achieve the benefits and advantages described herein. In one embodiment, the CM 240 can include one or more processes, such as software applications providing an activity, a function, or a systematic sequence of tasks that produces a specified result, for managing communications sessions.

FIGURE 3 is a flowchart illustrating an exemplary process 300 for determining next joint availability for a communication session using presence information, in accordance with embodiments of the present invention. At block 310, presence information indicating the current and future availability of a plurality of presentities is maintained. The presence information is collected from multiple presence sources, such as telephony applications, calendar applications and other applications. At block 320, a request for a communication session from an originating user to at least one destination user is received.

At block 330, the presence information of the originating user and the presence information of each destination user are extracted to determine the current availability of the originating user and the destination users for the communication session at block 340. If all parties are currently available (Y branch of 340), the communication session is established between the originating user and the destination user at block 350. However, if one or more of the originating user and destination users are currently unavailable for the communication session based on the presence information or based on the inability to establish the communication session (N branch of 340), a next available time for the communication session is determined from the presence information of both the originating user and the destination users at block 360. At block 370, this next available time is provided to the originating user for use in establishing a future communication session with the destination users.

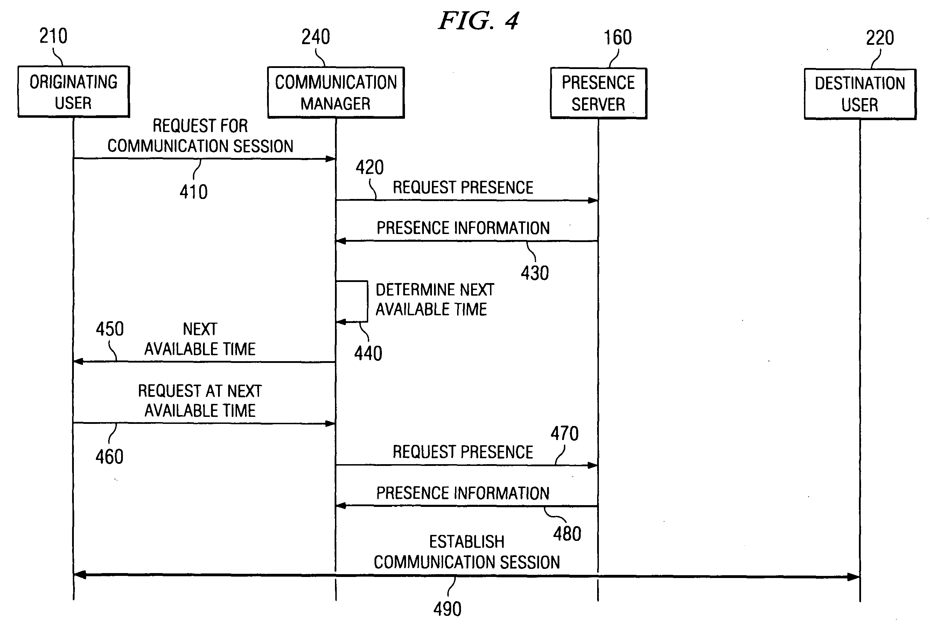

FIGURE 4 is a signal flow diagram illustrating an exemplary flow for establishing a communication session based on joint availability of an originating user 210 and a destination user 220, in accordance with embodiments of the present invention. At step 410, the originating user 210 sends a request for a communication session with the destination user to the communications manager (CM) 240. In response to receipt of the request, at step 420, the CM 240 requests the presence information of the originating user and the presence information of destination user from the presence server 160, and at step 430, the presence server 160 provides the requested presence information to the CM 240 for use in determining the current and future availability of the originating user 210 and the destination user 220 for the communication session.

If the originating user 210 and/or destination user 220 is currently unavailable for the communication session, at step 440, the CM 240 determines a next available time for the communication session from the presence information of both the originating user 210 and the destination user 220. At step 450, the CM 240 provides this next available time to the originating user 210 for use in establishing a future communication session with the destination user 220. Thus, at step 460, the originating user 210 transmits a new request for a communication session with the destination user 220 at the indicated next available time.

In response to receipt of the request, at step 470, the CM 240 again requests the presence information of the originating user and the presence information of destination user from the presence server 160, and at step 480, the presence server 160 provides the requested presence information to the CM 240 for use in determining the current availability of the originating user 210 and the destination user 220 for the communication session. If both parties are currently available, at step 490, a communication session is established between the originating user 210 and the destination user 220.

The following features, separately or in any combination, may also constitute advantageous embodiments of the described or claimed invention:
- The claimed and/or described communication system,
   wherein said communications manager is a software component on said presence server;
- The claimed and/or described communication system,
   wherein: said request further includes criteria for said communication session; and said next available time is determined based on said criteria;
- The claimed and/or described communication system, further comprising: a media server connected to receive said request for said communication session from said originating user and provide said request to said communications manager; wherein said media server is operable to establish said communication session between said originating user and said at least one destination user at said next available time;
- The claimed and/or described communication system, wherein said request is an attempt to substantially immediately initiate said communication session between said originating user and said at least one destination user;
- The claimed and/or described communication system, wherein said request is a request for said communication session at a future time;
- The claimed and/or described communication system, wherein said communications manager is further operable to provide said next available time to said originating user;
- The claimed and/or described communication system, wherein said presence server further maintains preference information for each of said presentities, said preference information filtering information provided to said originating user relating to said next available time;
- The claimed and/or described communication system, wherein said communications manager is further operable to negotiate confirmation of said next available time between said originating user and said at least one destination user in any available media;
- The claimed and/or described method, further comprising the step of: providing said next available time to said originating user;
- The claimed and/or described method, wherein said maintaining further includes maintaining preference information for each of said presentities, and wherein said providing said next available time to said originating user further comprises the step of: filtering information provided to said originating user relating to said next available time based on said preference information of said originating user and said at least one destination user.

As will be recognized by those skilled in the art, the innovative concepts described in the present application can be modified and varied over a wide rage of applications. Accordingly, the scope of patents subject matter should not be limited to any of the specific exemplary teachings discussed, but is instead defined by the following claims.

## Claims

1. A communication system for determining availability for communication session between an originating user and at least one destination user, comprising:
a presence server for collecting and storing presence information on a plurality of presentities from multiple presence sources, said plurality of presentities including said originating user and said at least one destination user, said presence information indicating current and future availability of said presentities; and
a communications manager connected to receive a request for said communication session from said originating user;
wherein said communications manager is operable to extract said presence information of said originating user and said at least one destination user from said presence server; and
wherein, in response to current unavailability of one or more of said originating user and said a least one destination user, said communications manager is operable to determine a next available time for said communication session from said presence information of said originating user and said at least one destination user.

2. The communication system of Claim 1, wherein:
said multiple presence sources include a calendar application providing scheduling information for said originating user and said at least one destination user; and
said presence information includes said scheduling information.

3. The communication system of Claim 1, wherein said communications manager is further operable to schedule said communication session in said calendar application for said originating user and said destination user at said next available time.

4. The communication system of Claim 2, wherein:
said multiple presence sources further includes a telephony application providing media status information for use in determining a media status of one or more media types associated with said originating user and said at least one destination user;
said presence information including said media status information; and
said request including a requested one of said media types.

5. The communication system of Claim 4, wherein said next available time includes one or more next available times in one or more of said media types.

6. The communication system of Claim 1, wherein said next available time includes one or more of the following: a specific time when said at least one destination user is available, a specific time when both said at least one destination user and said originating user are available, a time interval when said at least one destination user is available, a time interval when both said at least one destination user and said originating user are available, multiple time intervals when said at least one destination user is available and multiple time intervals when both said at least one destination user and said originating user are available.

7. A method for determining availability for a communication session between an originating user and at least one destination user, comprising:
maintaining presence information on a plurality of presentities collected from multiple presence sources, said plurality of presentities including said originating user and said at least one destination user, said presence information indicating current and future availability of said presentities;
receiving a request for said communication session from said originating user;
extracting said presence information of said originating user and said at least one destination user; and
in response to current unavailability of one or more of said originating user and said destination user, determining a next available time for said communication session from said presence information of said originating user and said at least one destination user.

8. The method of Claim 7, wherein said maintaining further comprises the step of collecting said presence information from a calendar application as scheduling information for said originating user and said at least one destination user and, further comprising the step of:
scheduling said communication session in said calendar application for said originating user and said destination user at said next available time.

9. The method of Claim 8, wherein said maintaining further comprises the step of:
collecting said presence information from a telephony application as media status information for use in determining a media status of one or more media types associated with said originating user and said at least one destination user, and wherein said next available time is associated with one or more of said media types.

10. The method of Claim 17, further comprising the step of:
establishing said communication session between said originating user and said at least one destination user at said next available time.
